# FASCICULE DE BREVET EUROPEEN

(11) **EP 0 652 155 B1**
(45) Date de publication et mention de la délivrance du brevet: **10.03.1999**
(21) Numéro de dépôt: 94402366.2
(22) Date de dépôt: 21.10.1994
(51) Int. Cl.: B65B 7/16, B65D 43/16, B65D 51/20

(54) **Procédé et dispositif de conditionnement de produits alimentaires, chimiques ou pharmaceutiques et barquettes de conditionnement correspondantes**
Verfahren und Vorrichtung zum Verpacken von Lebensmitteln, chemischen oder pharmazeutischen Produkten und Verpackungsschale dafür
Method and device for packaging food products, chemical or pharmaceutical products, and corresponding packaging tray

(30) Priorité: 10.11.1993 FR 9313412
(43) Date de publication de la demande: 10.05.1995
(73) Titulaire: MECAPLASTIC, F-93170 Bagnolet (FR)
(72) Inventeur: Robache, Patrick, F-75004 Paris (FR)
(74) Mandataire: Boutin, Antoine

(56) Documents cités:
- EP-A- 0 428 897
- FR-A- 1 521 936
- FR-A- 2 268 689
- US-A- 3 346 099
- US-A- 4 298 133
- US-A- 4 778 048

## Description

L'invention est relative à un procédé de conditionnement de produits alimentaires, chimiques ou pharmaceutiques, à un dispositif pour la mise en oeuvre dudit procédé, ainsi qu'à une barquette de conditionnement de produits alimentaires, chimiques ou pharmaceutiques.

On connaît de nombreux procédés et appareillages de conditionnement de produits alimentaires, chimiques ou pharmaceutiques. Généralement, on utilise deux rouleaux de bandes de matériaux déformables, la première bande étant destinée à être mise en forme pour constituer des cavités et la deuxième bande étant destinée à être soudée sur le périmètre des cavités pour constituer un operculage et un assemblage étanche protégeant les produits alimentaires, chimiques ou pharmaceutiques contenus dans les cavités.

L'isolation des produits contenus dans les cavités peut également être semi-étanche dans le cas d'une deuxième bande de matière déformable présentant des propriétés de barrière à l'humidité et d'étanchéité relative pour certains gaz.

Dans tous ces procédés et moyens de conditionnement connus, on accède au produit conditionné en défaisant ou en déchirant l'opercule réalisé à partir de la deuxième bande précitée. Après avoir accédé au contenu de la cavité, le produit conditionné n'est plus protégé, ce qui est particulièrement néfaste dans le cas de produits alimentaires en rations importantes. Une solution proposée pour remédier à cet inconvénient est d'obturer à nouveau la surface supérieure de la cavité par le moyen d'une feuille aluminium, d'un couvercle indépendant ou d'un emballage contenant la cavité et son contenu.

Cette solution alternative présente l'inconvénient selon lequel il est nécessaire de disposer en permanence d'un rouleau de feuille aluminium ou de matériau adéquat ou d'une réserve de couvercles indépendants pour obturer les barquettes de conditionnement.

Le document US 4.778.048 décrit un produit contenant une pile inclinée de serviettes humides. Le procédé et le dispositif de fabrication et de conditionnement de ce produit ne sont pas décrits dans ce document.

Le document US 3.346.099 décrit un conteneur à l'épreuve de l'humidité avec une paroi épaisse en matériau résilient. Le procédé et le dispositif de fabrication et de conditionnement de ce conteneur ne sont pas décrits dans ce document.

Le document FR 2.268.689 décrit un procédé, une installation et un récipient de conditionnement de produits liquides, pâteux ou granuleux, avec deux bandes différentes destinées à former d'une part des récipients et d'autre part des couvercles pour former des récipients scellés par une troisième bande supérieure de garantie.

L'invention a pour but de remédier aux inconvénients précités en permettant, même après le déchirement de l'opercule en matériau mince, d'obturer a nouveau la cavité pour en préserver le contenu.

L'invention a pour objet un procédé de conditionnement de produits alimentaires, chimiques ou pharmaceutiques, comportant en combinaison, les étapes suivantes dans l'ordre suivant :
a) saisir par pinçage une première bande de matière thermoplastique ou thermoformable,
b) mettre en forme par thermoformage la première bande de matière thermoplastique pour constituer simultanément une cavité et un couvercle associés,
c) charger en produits alimentaires, chimiques ou pharmaceutiques ladite cavité,
d) obturer ladite cavité par soudure d'une deuxième bande de matière thermoplastique ou thermosoudable, de manière à isoler lesdits produits alimentaires, chimiques ou pharmaceutiques,
e) découper dans la première bande thermoformée à l'étape b), les contours de la cavité et du couvercle de manière à constituer une charnière permettant la fermeture du couvercle sur la cavité obturée à l'étape d), ladite charnière étant matérialisée par au moins deux points de liaison, chaque point de liaison étant séparé d'un point de liaison voisin par une découpe en forme de segment de droite.

Selon d'autres caractéristiques de l'invention,
- on préchauffe la première bande de matière thermoplastique entre les étapes a) et b),
- avant l'étape d), on effectue un vide au moins partiel à l'intérieur de la cavité chargée en produits alimentaires, chimiques ou pharmaceutiques,
- on effectue en outre une réinjection de gaz neutre avant la soudure de la deuxième bande de matière thermoplastique ou thermosoudable.

L'invention a également pour objet une barquette de conditionnement de produits alimentaires, chimiques ou pharmaceutiques, du type comportant une cavité de réception desdits produits et un opercule soudé, la cavité étant thermoformée simultanément avec un couvercle venant de matière avec cette cavité, le couvercle étant relié à la cavité par une charnière d'articulation, la charnière d'articulation étant matérialisée par au moins deux points de liaison, caractérisée en ce que chaque point de liaison est séparé d'un point de liaison voisin par une découpe en forme de segment de droite.

Selon d'autres caractéristiques de l'invention,
- la cavité est limitée du côté de l'opercule par un rebord plan, et en ce que le couvercle comporte au moins sur le côté opposé a la zone de continuité de matière une conformation d'encliquetage avec ledit rebord plan.
- le couvercle comporte une conformation d'encliquetage avec la cavité.
- la conformation d'encliquetage s'étend sensiblement sur tout le périmètre libre du couvercle.

L'invention a également pour objet un dispositif de conditionnement de produits alimentaires, chimiques ou pharmaceutiques, comportant en combinaison des moyens pour saisir par pinçage une première bande de matière thermoplastique ou thermoformable ; des moyens pour mettre en forme par thermoformage la première bande de matière thermoplastique pour constituer simultanément une cavité et un couvercle associés ; des moyens pour charger en produits alimentaires, chimiques ou pharmaceutiques ladite cavité ; des moyens pour obturer ladite cavité par soudure d'une deuxième bande de matière thermoplastique ou thermosoudable, de manière à isoler lesdits produits alimentaires, chimiques ou pharmaceutiques ; et des moyens pour découper dans la première bande les contours de la cavité obturée et du couvercle de manière a constituer une charnière permettant la fermeture du couvercle sur la cavité, ladite charnière étant matérialisée par au moins deux points de liaison, chaque point de liaison étant séparé d'un point de liaison voisin par une découpe en forme de segment de droite.

Selon d'autres caractéristiques de l'invention,
- les moyens pour saisir par pinçage la première bande comportent des chaînes horizontales portant des pinces à ressort ;
- les moyens pour mettre en forme par thermoformage la première bande de matière thermoplastique comportent un assemblage modulaire de formes correspondant respectivement a un couvercle et a une cavité ;
- la forme correspondant au couvercle est montée en position fixe relativement au corps des moyens de thermoformage.
- la forme correspondant à la cavité est déplaçable relativement au corps des moyens de thermoformage sous l'action d'une commande en translation ;
- le dispositif comporte des moyens de prédécoupe longitudinale de la première bande de matière thermosoudable ;
- le dispositif comporte des moyens de découpe en segments de droite pour constituer la charnière d'articulation.

L'invention sera mieux comprise grâce à la description qui va suivre, donnée à titre d'exemple non limitatif en référence aux dessins annexés, dans lesquels :
- la figure 1 représente schématiquement une vue en coupe longitudinale d'un dispositif selon l'invention,
- la figure 2 représente schématiquement une vue de dessus d'un dispositif selon l'invention,
- les figures 3 à 8 représentent schématiquement les étapes successives d'un procédé de conditionnement selon l'invention,
- la figure 9 représente schématiquement une vue de dessus explicitant la mise en oeuvre de l'invention,
- la figure 10 représente schématiquement une vue en perspective avec coupe partielle d'une barquette de conditionnement selon l'invention,
- la figure 11 représente schématiquement en coupe transversale une barquette de conditionnement selon l'invention,
- la figure 12 représente schématiquement une vue en coupe transversale partielle d'un dispositif selon l'invention.

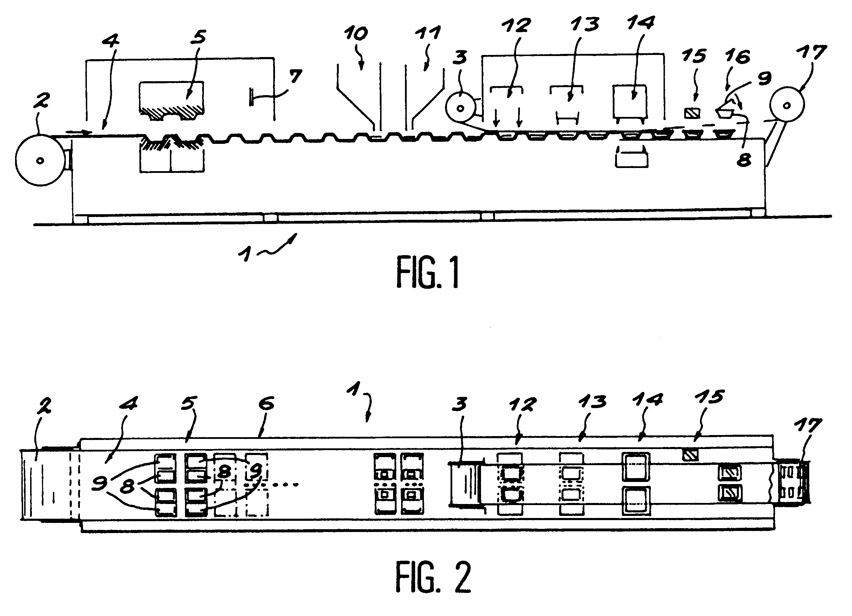

En référence aux figures 1 et 2, un dispositif selon l'invention désigné généralement par la référence 1 est constitué par assemblage modulaire de châssis porteurs de modules fonctionnels traitant successivement une première bande de matériau thermoplastique enroulée sur un rouleau 2 et une deuxième bande de matériau thermosoudable enroulée sur un rouleau 3. L'extrémité de la bande enroulée sur le rouleau 2 est saisie dans des chaînes horizontales sur les maillons desquelles sont montées des pinces de préhension de la bande de matière thermoplastique, de manière à entraîner la bande de matière thermoplastique 2 par pas discontinus correspondant à l'avancée de la bande du rouleau 2 dans les cycles successifs du procédé selon l'invention.

Les moyens de pinçage de la première bande de matière thermoplastique constitués par les chaînes horizontales sont en eux-mêmes connus et ne nécessitent pas de description plus détaillée.

La bande thermoplastique du rouleau 2 est déroulée à plat pour arriver dans une première zone 4 représentée libre sur les figures 1 et 2, et adaptée pour recevoir un dispositif de préchauffage de la bande de matériau thermoplastique, préchauffage effectué au moyen d'une plaque métallique présentant une bonne conductivité thermique dans laquelle est noyée un élément chauffant, par exemple une résistance blindée isolée électriquement par rapport à la plaque métallique.

Au sortir de la zone réservée au préchauffage 4, la bande de matière thermoplastique 2 avance par pas successifs dans une zone 5 de thermoformage comportant un module de thermoformage.

La technique de thermoformage utilisées dans la zone de thermoformage 5 est par exemple la technique de thermoformage dite en "négatif simple", technique la plus courante dans laquelle on réalise d'abord le chauffage de la bande de matériau à thermoformer en l'appliquant au contact d'une plaque chauffante, puis la déformation proprement dite par soufflage d'air comprimé au travers de la plaque chauffante précitée pourvue à cet effet d'orifices appropriés. Alternativement, le poste de thermoformage 5 peut également être conforme à la technique dite en "négatif avec assistance mécanique", technique dans laquelle le chauffage du film s'effectue par un contact de part et d'autre de celui-ci par prise en sandwich entre deux plaques régulées thermiquement éventuellement à des températures différentes, puis par descente d'un piston par exemple métallique pour pré-étirer le film ou la bande de matériau préformé et enfin par plaquage du film ou de la bande thermoplastique sur le moule par injection d'air ou de gaz comprimé à travers le piston pourvu à cet effet d'orifices appropriés.

Enfin, dans le cas de matériaux relativement rigides, le poste de thermoformage 5 peut être conforme à la technique dite en "positif avec bullage", technique dans laquelle on effectue tout d'abord le chauffage par contact entre deux plaques régulées thermiquement, puis on déforme la bande de matériau thermoplastique par aspiration dans la partie basse de l'outillage de manière à préétirer le film ou la bande thermoplastique et on effectue enfin le drapage, c'est-à-dire le plaquage du film sur le moule descendu à cet effet ou au niveau de la bande thermoplastique. Dans cette technique de "bullage" connu en soi, on obtient avantageusement des parois verticales de formes régulières avec des angles de barquettes de conditionnement d'une épaisseur suffisante pour éviter tout perçage ultérieur.

L'essentiel est, selon l'invention, que l'on réalise lors du thermoformage une cavité et un couvercle associés dans la bande de matière thermoplastique en provenance du rouleau 2. Au sortir de la zone de thermoformage 5, on effectue éventuellement un pastillage dans un module 6 comportant un poinçon symbolisé par la référence 7 qui découpe 6 à 10 fois par cycle une pastille destinée à une réinjection de gaz ultérieure. Le pastillage au moyen du poinçon symbolisé par le repère 7 s'effectue entre deux cavités 8 disposées en position adjacente et reliées chacune à un couvercle associé 9, comme cela sera décrit ci-après.

L'invention s'applique bien entendu au cas où on n'effectue pas de pastillage, soit en raison du fait que l'on n'effectue pas de réinjection de gaz, soit en raison du fait que la réinjection est effectuée au moyen d'une buse couvrant toute la largeur de l'outillage et se positionnant entre la cavité 8 réalisée à partir du rouleau 2 et un film d'operculage en provenance du rouleau 3.

Au sortir de la zone éventuelle de pastillage, les cavités 8 sont remplies, soit manuellement, soit au moyen d'appareils verseurs 10 ou doseurs 11 de produits à conditionner.

Après la zone de chargement comportant éventuellement les appareils 10 et 11, les cavités 8, remplies au moins partiellement d'un produit alimentaire, chimique ou pharmaceutique, sont obturées par une bande dite "film d'operculage" dévidée à partir du rouleau 3, l'opération de dévidage étant effectuée par des moyens connus appropriés.

La largeur de la bande de matériau thermosoudable dévidée à partir du rouleau 3 correspond à la couverture des cavités 8, sans toutefois recouvrir les couvercles associés 9 : la largeur du rouleau 3 est ainsi sensiblement voisine de la moitié de la largeur du rouleau 2.

La bande de matière thermosoudable dévidée du rouleau 3 est appliquée par un moule de soudure commandé par des vérins de forte poussée (de l'ordre de 10 MN), on effectue le thermosoudage de la bande 3 sur les cavités 8 de manière à isoler les produits alimentaires, chimiques ou pharmaceutiques à conditionner : à cet effet, on réalise une soudure continue à la périphérie du rebord de chaque cavité.

Comme type de soudure utilisable, on peut envisager une soudure à cordon plat, une soudure à cordon rayonné, une soudure plane, une soudure à bourrelet ou une soudure en pointe de diamant. Cette opération de soudage s'effectue dans la zone 12 comportant un module de thermosoudage, incorporant éventuellement un module de mise sous vide en fonction de la nature des matériaux à souder et des produits à contenir (en effet, pour certains produits émulsionnés ou à forte teneur en liquide, on ne peut effectuer qu'un vide partiel sous peine de faire bouillir le produit à conditionner). Le module de thermosoudage peut également comporter en complément du module de mise sous vide un module de réinjection fonctionnant suivant l'un ou l'autre des systèmes suivants :
- le système à réinjection par buse dans lequel on maintient le film d'operculage du rouleau 3 en positon retenue pour permettre la réinjection de gaz et dans lequel on utilise une buse couvrant toute la largeur de l'outillage de soudure et effectuant la réinjection de gaz sous le film d'operculage 3 à l'intérieur de la cavité 8,
- ou alternativement la technique de réinjection évoquée plus haut, dite "par pastillage", dans laquelle la bande inférieure préalablement découpée par le module de pastillage 6 permet d'effectuer une réinjection de gaz au moyen de conduits situés en position centrale ou en position latérale du moule de soudure, conduits par lesquels le gaz de réinjection débouche à travers l'emplacement en forme de pastille découpé dans la bande inférieure 2.

L'invention couvre également toute variante de module de thermosoudage dans laquelle le moule de soudure est un moule chauffant ou une plaque chauffante permettant d'effectuer la rétraction du film d'operculage 3 ou éventuellement de la cavité 8 autour du produit conditionné.

Au sortir du poste de thermosoudage 12, on effectue dans un poste 13 muni de lames ou couteaux mobiles appropriés une première découpe de la première bande 2. Cette découpe est de préférence effectuée selon la technique dite de "découpe longitudinale par écrasement", de manière à découper uniquement la bande thermoformée 2 selon une ligne pointillée parallèle à la direction d'avancement.

En sortie du poste de prédécoupe 13 du film 2 de thermoformage, on réalise dans un poste de découpe en forme 14 la découpe complète du contour de la cavité et du couvercle adjacent qui vient de matière avec cette cavité.

Enfin, de manière optionnelle, on réalise le dépôt d'une étiquette, le marquage ou le repérage de l'opercule soudé dans un poste 15 manuel ou automatique, ce qui permet d'identifier précisément le produit malgré l'utilisation d'un film transparent ou non-imprimé. Après avoir déposé une étiquette au poste 15 ou une carte indicatrice analogue, par exemple au moyen d'un bras mobile à commande mécanique, apte à positionner les cartelettes ou étiquettes indicatrices sur l'opercule soudé, il suffit de rabattre dans le poste 16 de finition le couvercle venant de matière avec la cavité 8 pour l'encliqueter sur celle-ci. Alternativement, ces étiquettes ou cartelettes indicatrices peuvent être rendues solidaires du couvercle par leur face visible, de manière à indiquer la nature du contenu même après déchirement de l'opercule.

La bande d'operculage dévidée à partir du rouleau 3 est de préférence enroulée par des moyens connus en soi sur un autre rouleau 17 permettant de récupérer cette bande d'operculage et évitant tout encombrement au niveau du dégagement des produits entièrement emballés.

Avantageusement, un rouleau 17 de plus grande largeur peut recevoir simultanément la bande de thermoformage et la bande d'operculage.

L'invention couvre également les variantes dans lesquelles la bande thermosoudable enroulée sur le rouleau 3 est étiquetée au préalable avant d'effectuer le thermosoudage dans le poste de thermosoudage 12 ; ou les variantes selon lesquelles la soudure ne s'effectue pas par thermosoudage mais par soudure haute-fréquence à l'aide d'un poste de soudure alimenté par un générateur haute-fréquence de puissance efficace voisine de 6 kw et comportant éventuellement des électrodes spéciales à profil coupant pour effectuer simultanément la découpe réalisée dans le module 13 de prédécoupe du film d'operculage.

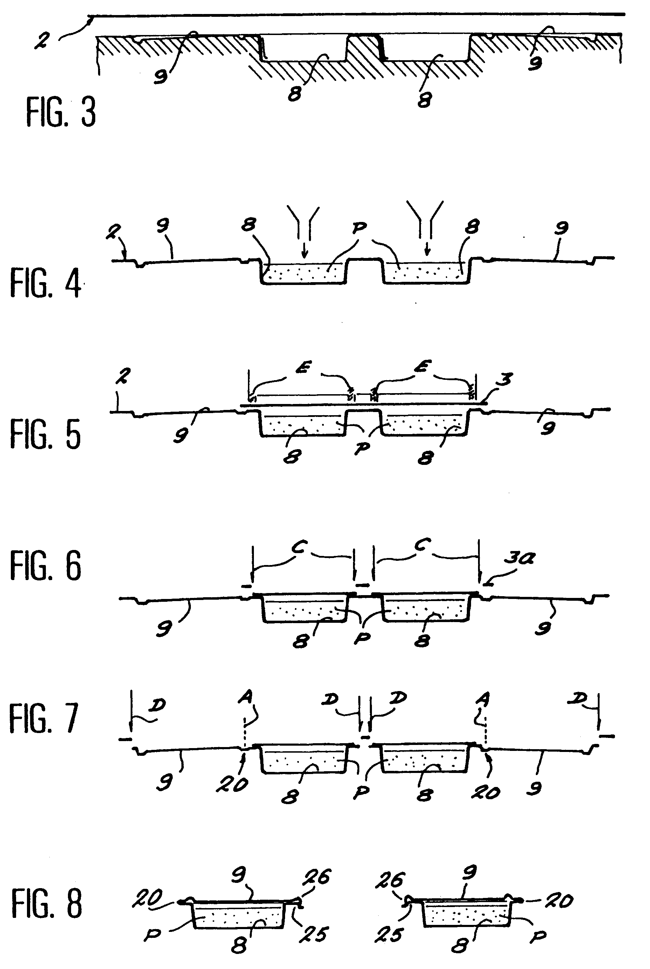

En référence aux figures 3 à 8 représentant des vues successives de la bande thermoplastique vue en coupe transversale, on a représenté sur la figure 3 la phase de thermoformage réalisée dans le module 5 pour constituer simultanément une cavité 8 et un couvercle 9 dans la bande 2 de matériau thermoplastique avançant pas-à-pas selon un pas d'avance prédéterminé en fonction des dimensions du moule correspondant.

Sur la figure 4, on effectue le remplissage simultané des cavités 8 par un produit P. Le produit P remplit au moins partiellement chaque cavité 8 sans toutefois déborder de celle-ci.

Sur la figure 5, la bande thermosoudable 3 destinée à l'operculage est appliquée par des électrodes de soudure E selon le contour de chaque cavité 8 de manière à constituer par soudure un rebord d'obturation de l'opercule autour de chaque cavité 8.

Sur la figure 6, des couteaux mobiles ou organes tranchants équivalents découpent la première bande 2 de thermoformage selon un découpage longitudinal en pointillé.

Sur la figure 7, correspondant au module de découpe en forme 14, des moyens de découpe D effectuent simultanément la découpe d'une cavité 8 et d'un couvercle 9 associés, tandis que d'autres moyens de découpe A effectuent une découpe en traits interrompus à l'emplacement d'une charnière 20 qui sera décrite ci-après.

Bien entendu, les couteaux A découpant des traits interrompus peuvent être prévus dans le module de prédécoupage mentionné à la figure 6.

Sur la figure 8, l'assemblage terminé des barquettes de conditionnement selon l'invention est représenté après encliquetage du couvercle 9 sur la cavité 8 operculée.

Selon l'invention, les couvercles 9 viennent de matière avec les cavités 8 associées et sont reliés aux cavités 8 par une charnière d'articulation matérialisée par au moins deux points de liaison en matière thermoplastique ou thermoformable.

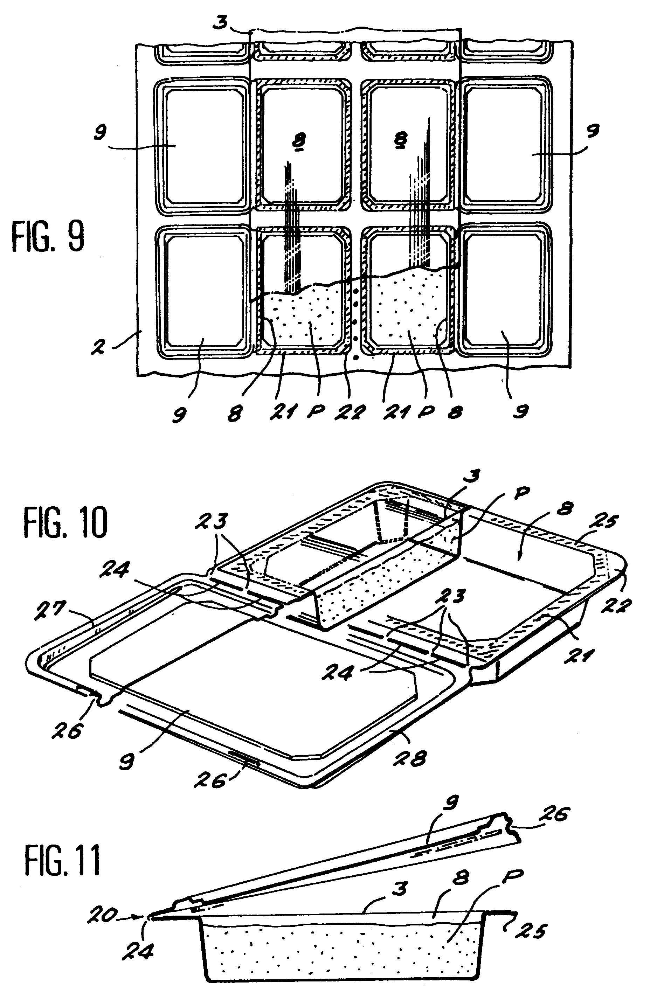

En référence à la figure 9, les éléments de repère identiques à ceux des figures précédentes désignent des éléments identiques ou similaires à ceux des figures précédentes.

L'application du film d'operculage 3 sur la bande thermoformée 2 s'effectue au moyen d'électrodes de soudure réalisant des cordons soudés 21 réalisant une jonction plane entre le film d'operculage 3 et la bande thermoformée 2. Du côté opposé au couvercle 9, on prévoit de laisser sur chaque rebord plan une zone 22 située en angle permettant un décollement ou un déchirement faciles après réalisation de l'opercule de la cavité 8.

En référence aux figures 10 et 11, l'opercule réalisé en matériau 3 obture la cavité 8 contenant le produit P lorsque le couvercle 9 est ouvert, tandis que la cavité 8 est en outre obturable par le couvercle 9 venant de matière avec la cavité 8 (figure 11). La charnière d'articulation 20 est matérialisée par des points de liaison 23 séparés par des découpes en forme de segments de droites 24 réalisés par les moyens de découpe A de la figure 6. Les diverses techniques de découpe longitudinale ou transversale sont maintenant bien connues : à titre d'exemple, on citera la technique de découpe transversale à guillotine, de découpe transversale à massicot, de découpe transversale à poinçon émettrice, de découpe transversale par écrasement, de découpe longitudinale par couteau circulaire motorisé, de découpe longitudinale par écrasement à l'aide de couteaux pneumatiques, de découpe longitudinale à cisaillement, etc...

Les systèmes de découpe en forme, c'est-à-dire de découpe en suivant un contour prédéterminé correspondant par exemple au périmètre du couvercle neuf et du rebord plan 24 de la cavité 8, sont également bien connus : à titre d'exemple, on citera le système de découpe en forme par poinçon et matrice dans lequel le poinçon à la forme extérieure définitive choisie pour l'emballage. Pour assurer l'encliquetage du couvercle neuf sur le rebord plan 24 de la cavité 8, on prévoit à l'opposé de la zone de la zone de continuité de matière correspondant aux points de liaison 23, une conformation d'encliquetage 26 s'enclenchant avec le rebord plan 25, de manière à assurer une obturation efficace de la cavité 8 par le couvercle 9 même après déchirement de l'opercule en matériau 3. L'invention couvre également le cas où la conformation d'encliquetage 26 est disposée à une autre position, par exemple en angle. Avantageusement, la conformation d'encliquetage comporte non seulement la conformation 26 mais également deux conformations adjacentes 27 et 28 permettant d'assurer l'encliquetage non seulement sur le côté opposé à la charnière 20, mais également sur les trois autres côtés du contour rectangulaire du rebord plan 25 de la cavité 8 : on prévoit par conséquent que la conformation d'encliquetage totale constituée par les conformations 26, 27 et 28, s'étend sensiblement sur tout le périmètre libre du couvercle 9.

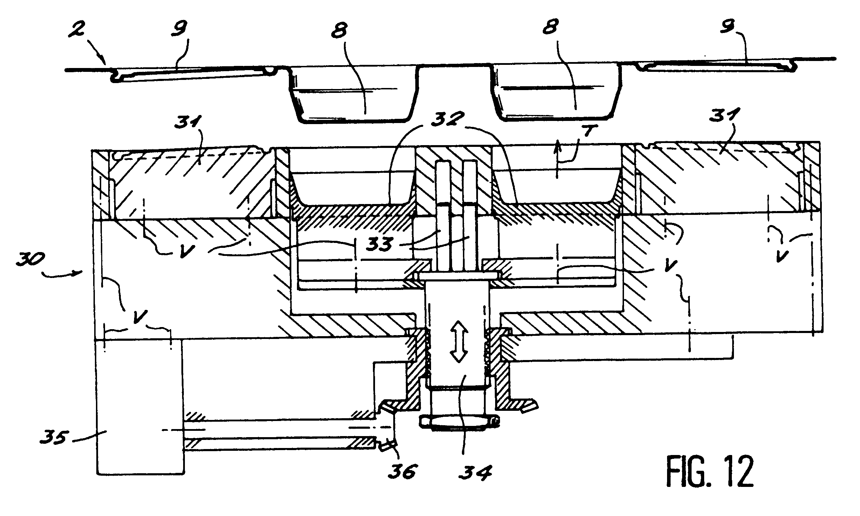

En référence à la figure 12, un moule de thermoformage 30 destiné à réaliser dans une bande de matériau 2 un couvercle 9, une cavité 8, un deuxième couvercle 9 et une deuxième cavité 8 associés est construit de façon modulaire par assemblage de formes 31 correspondant aux couvercles 9 et de formes 32 correspondant aux cavités 8. L'assemblage est effectué de manière connue par un montage mécanique au moyen de vis ou de tirants symbolisés par des traits d'axes V. On prévoit avantageusement de monter les formes 32 correspondant aux cavités 8 de manière déplaçable, selon une translation verticale dans le sens de la flèche T. La commande du déplacement vertical est effectuée au moyen d'un système de guidage à colonne 33 et d'un vérin à vis 34 commandés par un motoréducteur 35 par l'intermédiaire d'un renvoi d'angle 36 à engrenage. Grâce à cette disposition avantageuse, il est possible de régler à volonté et automatiquement la profondeur des cavités 8 en fonction des quantités de produits P à conditionner.

L'invention, bien que décrite en référence à des modes de réalisation particuliers, n'y est nullement limitée mais couvre au contraire toutes modifications de formes et toutes variantes de réalisation dans le cadre de l'invention. Ainsi, on peut prévoir que le système d'avancée par pas discrets se fasse sous commande d'un moteur à deux vitesses couplé à un codeur optique enregistrant l'avancée : cette disposition permet d'obtenir un pas d'avancée réglable au dixième de millimètre par rapport à une consigne affichée sur un compteur disposé en façade du dispositif selon l'invention. De manière avantageuse, l'avancée entre deux étapes de thermoformage s'effectue en grande vitesse, un ralentissement étant prévu en fin de mouvement pour obtenir un arrêt précis des chaînes de pincement.

Alternativement, au lieu d'utiliser un moteur électrique à deux vitesses, on utilisera un système d'avancement à commande électronique comportant un microprocesseur programmable, commande destinée à commander un moteur à courant alternatif triphasé associé à un codeur optoélectronique à deux voies déphasées. Dans ce cas, le freinage en fin d'avancée est obtenu par réinjection de courant continu, ce qui évite les dérives dans le temps et augmente la fiabilité de positionnement. De ce fait, le système à commande électronique ne subit aucun cumul d'erreur et permet d'optimiser l'utilisation du film thermoformable 2. De manière avantageuse, dans le cas d'une commande électronique, on peut également adapter avec précision la courbe d'avancée en fonction des produits à conditionner : ainsi, pour des produits solides, on utilisera une accélération et une vitesse d'avancement maximales ; pour les produits liquides, on utilisera une courbe relativement amortie de manière à supprimer l'effet de vague qui, pour des produits liquides, entraînerait un débordement hors des cavités 8 ; enfin, pour des produits fragiles ou pâteux, on utilisera des réglages intermédiaires déterminés par expérience ou par apprentissage. Toutes ces courbes d'avancée peuvent être directement mémorisées dans une mémoire annexe et appelées directement d'un tableau de commande, de préférence comportant un écran tactile de dialogue direct avec l'opérateur. Egalement, selon une autre variante avantageuse, l'ensemble du dispositif selon l'invention est commandé par un automate programmable assurant toutes les fonctions de la machine et vérifiant instantanément les temps de soudure, mise sous vide, réinjection de gaz, thermoformage, etc... en fonction des temporisations désirées affichées sur des temporisateurs analogiques par l'opérateur commandant le dispositif. L'automate programmable de commande est de préférence interfacé avec l'écran tactile pour afficher une arborescence de blocs Entrée - Sortie comportant des textes correspondant d'une part aux anomalies des éléments de la machine et des blocs de mise en sécurité instantanée arrêtant simultanément tous les modules faisant partie du dispositif selon l'invention.

Le système d'apprentissage et d'information incorporé dans l'automate programmable et les mémoires annexes fournissent sur l'écran tactile toutes les informations générales sur la machine, toutes les informations nécessaires à la maintenance telles que le cumul des temps de fonctionnement, toutes les informations nécessaires à l'estimation de la production telle que la comptabilisation des emballages produits, toutes les informations requises pour effectuer les réglages adaptables aux types de films ou bandes de matière thermoplastique utilisables (informations généralement chargées sous formes de bases de données en provenance des fournisseurs de matières thermoplastiques), ainsi que toutes les informations nécessaires pour changer et régler chaque outillage de chaque module.

## Revendications

1. Procédé de conditionnement de produits alimentaires, chimiques ou pharmaceutiques, comportant en combinaison, les étapes suivantes dans l'ordre suivant :
a) saisir par pinçage une première bande (2) de matière thermoplastique ou thermoformable,
b) mettre en forme (5) par thermoformage la première bande (2) de matière thermoplastique pour constituer simultanément une cavité (8) et un couvercle (9) associés,
c) charger en produits (P) alimentaires, chimiques ou pharmaceutiques ladite cavité (8),
d) obturer ladite cavité (8) par soudure d'une deuxième bande (3) de matière thermoplastique ou thermosoudable, de manière a isoler lesdits produits alimentaires, chimiques ou pharmaceutiques (P),
e) découper dans la première bande thermoformée à l'étape b) les contours de la cavité (8) et du couvercle (9) de manière a constituer une charnière (20) permettant la fermeture du couvercle (9) sur la cavité (8), obturée à l'étape d), ladite charnière étant matérialisée par au moins deux points de liaison (23), chaque point de liaison étant séparé d'un point de liaison voisin (23) par une découpe en forme de segment de droite (24).

2. Procédé selon la revendication 1, caractérisé en ce qu'on préchauffe (4) la première bande (2) de matière thermoplastique entre les étapes a) et b).

3. Procédé selon la revendication 1 ou la revendication 2, caractérisé en ce que, avant l'étape d), on effectue un vide au moins partiel à l'intérieur de la cavité (8) chargée en produits alimentaires, chimiques ou pharmaceutiques (P).

4. Procédé selon la revendication 3, caractérisé en ce qu'on effectue en outre une réinjection de gaz neutre avant la soudure (12) de la deuxième bande (3) de matière thermoplastique ou thermosoudable.

5. Barquette de conditionnement de produits alimentaires, chimiques ou pharmaceutiques, du type comportant une cavité de réception desdits produits et un opercule soudé, la cavité (8) étant thermoformée simultanément avec un couvercle (9) venant de matière avec cette cavité (8), le couvercle (9) étant relié à la cavité (8) par une charnière d'articulation (20), la charnière d'articulation (20) étant matérialisée par au moins deux points (23) de liaison, caractérisée en ce que chaque point de liaison (23) est séparé d'un point de liaison voisin (23) par une découpe en forme de segment de droite (24).

6. Barquette selon la revendication 5, caractérisée en ce que la cavité (8) est limitée du côté de l'opercule (3) par un rebord plan (25), et en ce que le couvercle (9) comporte au moins sur le côté opposé a la zone de continuité (20) de matière une conformation d'encliquetage (26) avec ledit rebord plan (25).

7. Barquette selon la revendication 5, caractérisée en ce que le couvercle (9) comporte une conformation d'encliquetage (26, 27, 28) avec la cavité (8).

8. Barquette selon la revendication 6, caractérisée en ce que la conformation d'encliquetage s'étend sensiblement sur tout le périmètre (26, 27, 28) libre du couvercle (9).

9. Dispositif de conditionnement de produits alimentaires, chimiques ou pharmaceutiques, comportant en combinaison des moyens pour saisir par pinçage une première bande (2) de matière thermoplastique ou thermoformable ; des moyens pour mettre en forme (5) par thermoformage la première bande (2) de matière thermoplastique pour constituer simultanément une cavité (8) et un couvercle (9) associés ; des moyens pour charger en produits (P) alimentaires, chimiques ou pharmaceutiques ladite cavité (8) ; des moyens pour obturer ladite cavité (8) par soudure d'une deuxième bande (3) de matière thermoplastique ou thermosoudable, de manière a isoler lesdits produits alimentaires, chimiques ou pharmaceutiques (P) ; et des moyens pour découper dans la première bande les contours de la cavité (8) obturée et du couvercle (9) de manière à constituer une charnière (20) permettant la fermeture du couvercle (9) sur la cavité (8), ladite charnière étant matérialisée par au moins deux points de liaison (23), chaque point de liaison étant séparé d'un point de liaison voisin (23) par une découpe en forme de segment de droite (24).

10. Dispositif selon la revendication 9, caractérisé en ce que les moyens pour saisir par pinçage la première bande (2) comportent des chaînes horizontales portant des pinces a ressort.

11. Dispositif selon la revendication 9 ou la revendication 10, caractérisé en ce que les moyens pour mettre en forme par thermoformage la première bande (2) de matière thermoplastique comportent un assemblage modulaire de formes (31, 32) correspondant respectivement à un couvercle (9) et a une cavité (8).

12. Dispositif selon la revendication 11, caractérisé en ce que la forme (31) correspondant au couvercle (9) est montée en position fixe relativement au corps des moyens de thermoformage.

13. Dispositif selon la revendication 11 ou 12, caractérisé en ce que la forme (32) correspondant à la cavité (8) est déplaçable relativement au corps des moyens de thermoformage sous l'action d'une commande (33-36) en translation (T).

14. Dispositif selon l'une des revendication 9 à 13, caractérisé en ce que le dispositif comporte des moyens de prédécoupe (C) de la première bande (2) de matière thermoformable.

15. Dispositif selon l'une des revendications 9 à 14, caractérisé en ce que le dispositif comporte des moyens (A) de découpe en segments (24) de droite pour constituer la charnière d'articulation (20).

## Claims

1. Method for packaging food, chemical or pharmaceutical products, comprising, in combination, the following steps performed in the following order:
a) gripping hold of a first strip (2) of thermoplastic or thermoformable material,
b) using thermoforming to shape (5) the first strip (2) of thermoplastic in order simultaneously to form an associated cavity (8) and lid (9),
c) filling the said cavity (8) with food, chemical or pharmaceutical products (P),
d) sealing the said cavity (8) by welding of a second strip (3) of thermoplastic or thermoweldable material, so as to isolate the said food, chemical or pharmaceutical products (P),
e) cutting in the first strip that was thermoformed in step b) the outlines of the cavity (8) and of the lid (9) so as to form a hinge (20) that will allow the lid (9) to be closed onto the cavity (8) sealed in step d), the said hinge being embodied by at least two connecting points (23), each connecting point being separated from an adjacent connecting point (23) by a cutout in the form of a section of a straight line (24).

2. Method according to Claim 1, characterized in that the first strip (2) of thermoplastic is preheated (4) between steps a) and b).

3. Method according to Claim 1 or Claim 2, characterized in that, prior to step d), an at least partial vacuum is created inside the cavity (8) filled with food, chemical or pharmaceutical products (P).

4. Method according to Claim 3, characterized in that a neutral gas is also reinjected before the second strip (3) of thermoplastic or thermoweldable material is welded (12).

5. Tray for packaging food, chemical or pharmaceutical products, of the type comprising a cavity for containing the said products and a welded-on seal, the cavity (8) being thermoformed at the same time as a lid (9) that is formed integrally with this cavity (8), the lid (9) being connected to the cavity (8) by an articulating hinge (20), the articulating hinge (20) being embodied by at least two connecting points (23), characterized in that each connecting point (23) is separated from an adjacent connecting point (23) by a cutout in the form of a section of a straight line (24).

6. Tray according to Claim 5, characterized in that the cavity (8) is bounded on the same side as the seal (3) by a flat rim (25) and in that the lid (9) has, at least on the side opposite the region (20) of continuity of material, a shaping (26) for clipping-together with the said flat rim (25).

7. Tray according to Claim 5, characterized in that the lid (9) has a shaping (26, 27, 28) for clipping-together with the cavity (8).

8. Tray according to Claim 6, characterized in that the clipping-together shaping extends substantially over the entire free perimeter (26, 27, 28) of the lid (9).

9. Device for packaging food, chemical or pharmaceutical products, comprising, in combination, means for gripping hold of a first strip (2) of thermoplastic or thermoformable material; means (5) for using thermoforming to shape the first strip (2) of thermoplastic in order simultaneously to form an associated cavity (8) and lid (9); means for filling the said cavity (8) with food, chemical or pharmaceutical products (P); means for sealing the said cavity (8) by welding of a second strip (3) of thermoplastic or thermoweldable material, so as to isolate the said food, chemical or pharmaceutical products (P) ; and means for cutting in the first strip the outlines of the sealed cavity (8) and of the lid (9) so as to form a hinge (20) that will allow the lid (9) to be closed onto the cavity (8), the said hinge being embodied by at least two connecting points (23), each connecting point being separated from an adjacent connecting point (23) by a cutout in the form of a section of a straight line (24).

10. Device according to Claim 9, characterized in that the means for gripping hold of the first strip (2) comprise horizontal chains carrying spring clips.

11. Device according to Claim 9 or Claim 10, characterized in that the means for using thermoforming to shape the first strip (2) of thermoplastic comprise a modular collection of shapers (31, 32) that correspond to a lid (9) and a cavity (8) respectively.

12. Device according to Claim 11, characterized in that the shaper (31) corresponding to the lid (9) is mounted in a fixed position relative to the body of the thermoforming means.

13. Device according to Claim 11 or 12, characterized in that the shaper (32) corresponding to the cavity (8) can be moved relative to the body of the thermoforming means under the action of a device (33-36) that brings about translation (T).

14. Device according to one of Claims 9 to 13, characterized in that the device comprises means (C) of precutting the first strip (2) of thermoformable material.

15. Device according to one of Claims 9 to 14, characterized in that the device comprises means (A) for cutting out sections (24) of a straight line so as to form the articulating hinge (20).

## Patentansprüche

1. Verfahren zum Verpacken von Lebensmittel-, chemischen oder pharmazeutischen Produkten, bestehend aus der Kombination der folgenden Verfahrensschritte in der folgenden Abfolge:
a) durch Festklemmen einen ersten Streifen (2) aus Thermoplast oder warmverformbarem Material ergreifen,
b) den ersten Streifen (2) aus Thermoplast durch Warmformung in Form (5) bringen, so daß gleichzeitig eine Vertiefung (8) und ein Deckel (9) gebildet werden, die mit einander verbunden sind,
c) die genannte Vertiefung (8) mit Lebensmittel-, chemischen oder pharmazeutischen Produkten (P) befüllen,
d) die genannte Vertiefung (8) durch Verschweißen eines zweiten Streifens (3) aus Thermoplast oder heißsiegelfähigem Material verschließen, so daß die genannten Lebensmittel-, chemischen oder pharmazeutischen Produkte (P) isoliert verpackt sind,
e) an dem ersten Streifen, der in dem Verfahrensschritt b) warmgeformt wurde, die Konturen der Vertifung (8) und des Deckels (9) dergestalt ausscheiden, daß ein Scharnier (20) gebildet wird, das es ermöglicht, den Deckel (9) auf der in dem Verfahrensschritt d) versiegelten Vertiefung (8) zu schließen, wobei das genannte Scharnier in mindestens zwei Verbindungsstellen (23) besteht, wobei jede Verbindungsstelle von der nächsten Verbindungsstelle (23) durch einen Ausschnitt mit der Form eines Geradenabschnitts (24) getrennt ist.

2. Verfahren nach Anspruch 1,
**dadurch gekennzeichnet, daß** der erste Streifen (2) aus Thermoplast zwischen den Verfahrensshritten a) und b) vorerhitzt wird.

3. Verfahren nach Anspruch 1 oder 2,
**dadurch gekennzeichnet, daß** vor dem Verfahrensschritt d) in der mit Lebensmittel-, chemischen oder pharmazeutischen Produkten (P) befüllten Vertiefung (8) zumindest ein Teilvakuum geschaffen wird.

4. Verfahren nach Anspruch 3,
**dadurch gekennzeichnet, daß** außerdem vor dem Verschweißen (12) des zweiten Streifens (3) aus Thermoplast oder heißsiegelfähigem Material neutrales Gas eingeblasen wird.

5. Verpackungsscale für Lebensmittel-, chemische oder pharmazeutische Produkte des Typs mit einer Vertifung zur Aufnahme der genannten Produkte und einer verschweißten Abdeckung, wobei die Vertiefung (8) gleichzeitig mit einem Deckel (9) aus dem gleichem Materialstück warmgeformt wird, wobei der Deckel (9) mit der Vertiefung (8) durch ein Gelenksharnier (20) verbunden ist und das Gelenkscharnier (20) in mindestens zwei Verbindungsstellen (23) besteht,
**dadurch gekennzeichnet, daß** jede Verbindingsstelle (23) von der nächsten Verbindungsstelle (23) durch einen Ausschnitt mit der Form eines Geradenabschnitts (24) getrennt ist.

6. Verpackungsschale nach Anspruch 5,
**dadurch gekennzeichnet, daß** die Vertiefung (8) zu der Abdeckung (3) hin von einem ebenen Rand (25) umgrenzt wird, und daß der Deckel (9) zumindest an der Seite, die der Seite mit den durchgehenden Materialstellen (20) gegenüberliegt, eine mit dem genannten ebenen Rand (25) zusammenwirkende Einschnapp-Formgebung (26) aufweist.

7. Verpackungsscale nach Anspruch 5,
**dadurch gekennzeichnet, daß** der Deckel (9) eine mit der Vertiefung (8) zusammenwirkende Einschnapp-Formgebung (26, 27, 28) aufweist.

8. Verpackungsschale nach Anspruch 6,
**dadurch gekennezeichnet, daß** die Einschnapp-Formgebung sich im wesentlichen über den gesamte freien Umfang (26, 27, 28) des Deckels (9) erstreckt.

9. Vorrichtung zum Verpacken von Lebensmittel-, chemischen oder pharmazeutischen Produkten, bestehend aus einer Kombination von Mittel, um durch Festklemmen einen ersten Streifen (2) aus Thermoplast oder warmverformbarem Material zu ergreifen; von Mitteln, um den ersten Streifen (2) aus Thermoplast durch Warmformung in Form (5) zu bringen, so daß gleichzeitig eine Vertiefung (8) und ein Deckel (9) gebildet werden, die miteinander verbunden sind; von Mitteln, um die genannte Vertiefung (8) mit Lebensmittel-, chemischen oder pharmazeutischen Produkten (P) zu befüllen; von Mitteln, um die genannte Vertiefung (8) durch Verschweißen eines zweiten Streifens (3) aus Thermoplast oder heißsiegelfähigem Material zu verschließen, so daß die genannten Lebensmittel-, chemischen oder pharmazeutischen Produkte (P) isoliert verpackt sind; und von Mitteln, um an dem ersten Streifen die Konturen der Vertiefung (8) und des Deckels (9) dergestalt auszuschneiden, daß in Scharnier (20) gebildet wird, das es ermöglicht, den Deckel (9) auf der Vertiefung (8) zu schließen, wobei das genannte Scharnier in mindestens zwei Verbindungsstellen (23) besteht, wobei jede Verbindungsstelle von der nächsten Verbindungsstelle (23) durch einen Ausschnitt mit der Form eines Geradenabschnitts (24) getrennt ist.

10. Vorrichtung nach Anspruch 9,
**dadurch gekennzeichnet, daß** die Mittel, um durch Festklemmen den ersten Streifen (2) zu ergriffen, aus waagerechten Ketten bestehen, an denen Federzangen sitzen.

11. Vorrichtung nach Anspruch 9 oder 10,
**dadurch gekennzeichnet, daß** die Mittel, um den ersten Streifen (2) aus Thermoplast durch Warmformung in Form (5) zu bringen, aus einer modularen Gesamtanordnung von Formen (31, 32) bestehen, die einem Deckel (9) bzw. einer Vertiefung (8) entsprechen.

12. Vorrichtung nach Anspruch 11,
**dadurch gekennzeichnet, daß** die dem Deckel (9) entsprechende Form (31) in einer zu dem Körper der Warmverformungsmittel feststehenden Stellung montiert wird.

13. Vorrichtung nach Anspruch 11 oder 12,
**dadurch gekennzeichnet, daß** die der Vertiefung (8) entsprechende Form (32) unter der Einwirkung einer Steuerung (33-36) in Vorschubrichtung (T) relativ zu dem Körper der Warmverformungsmittel verschiebbar ist.

14. Vorrichtung nach einem der Ansprüche 9 bis 13,
**dadurch gekennzeichnet, daß** sie Mittel zum Vorschneiden (C) des ersten Streifens (2) aus Thermoplast aufweist.

15. Vorrichtung nach einem der Ansprüche 9 bis 14,
**dadurch gekennzeichnet, daß** sie Mittel (A) zum Ausschneiden in Geradenabschnitten (24) aufweist, um das Gelenkscharnier (20) zu bilden.
